# EUROPÄISCHE PATENTSCHRIFT

(11) **EP 3 657 266 B1**
(45) Veröffentlichungstag und Bekanntmachung des Hinweises auf die Patenterteilung: **19.04.2023**
(21) Anmeldenummer: 19210758.9
(22) Anmeldetag: 21.11.2019
(51) Int. Cl.: G03H 1/04, G03H 1/10, G03H 1/20, G03H 1/30, G03H 1/00, G03H 1/26, G03H 1/02, G02B 27/10

(54) **VORRICHTUNG UND VERFAHREN ZUM ERZEUGEN EINES HOLOGRAMMS**
METHOD AND DEVICE FOR CREATING A HOLOGRAM
DISPOSITIF ET PROCÉDÉ DE GÉNÉRATION D'UN HOLOGRAMME

(30) Priorität: 22.11.2018 DE 102018220099
(43) Veröffentlichungstag der Anmeldung: 27.05.2020
(73) Patentinhaber: Bundesdruckerei GmbH, 10969 Berlin (DE)
(72) Erfinder: Richter, Werner, 80999 München (DE); Langgaßner, Michael, 81245 München (DE)
(74) Vertreter: Patentanwälte Bressel und Partner mbB

(56) Entgegenhaltungen:
- WO-A1-2011/070350
- DE-A1-102012 215 540
- DE-A1-102015 220 123
- US-A1- 2014 055 830
- XIN TAN ET AL: "DIFFRACTIVE PHASE ELEMENTS FOR BEAM SHAPING: A NEW DESIGN METHOD", APPLIED OPTICS, OPTICAL SOCIETY OF AMERICA, WASHINGTON, DC, US, Bd. 34, Nr. 8, 10. März 1995 (1995-03-10), Seiten 1314-1320, XP000491217, ISSN: 0003-6935

## Beschreibung

Die Erfindung betrifft eine Vorrichtung und ein Verfahren zum Erzeugen eines Hologramms mit einem Hologrammmaster, insbesondere in Kontaktkopie.

Zur Absicherung von Wert- oder Sicherheitsdokumenten werden Hologramme als Sicherheitselemente eingesetzt. Die Hologramme erschweren eine Fälschung oder Nachahmung des Wert- oder Sicherheitsdokuments und erhöhen hierdurch dessen Sicherheit.

Um Hologramme auch in der Massenproduktion von Wert- oder Sicherheitsdokumenten als Sicherheitsmerkmale einsetzen zu können, müssen Hologramme bei der Herstellung der Wert- oder Sicherheitsdokumente auf effiziente Weise hergestellt, insbesondere kopiert, werden.

Ein Kopieren erfolgt üblicherweise im sogenannten Kontaktkopieverfahren. Hierzu wird ein zu kopierender Hologrammmaster in Form eines Masterhologramms hergestellt, in dem die holografische Information gespeichert ist. Anschließend wird ein zu belichtendes holografisches Aufzeichnungsmaterial, beispielsweise ein Hologrammfilm aus einem Fotopolymer, flächig an dem Hologrammmaster angeordnet. Wird der Hologrammmaster mit entsprechender Laserstrahlung bestrahlt, so wird das im Hologrammmaster gespeicherte Hologramm rekonstruiert und in den Hologrammfilm einbelichtet, d.h. in diesen hineinkopiert. Eine entsprechende Vorrichtung und ein entsprechendes Verfahren sind beispielsweise in der EP 0 896 260 A2 beschrieben.

Insbesondere wird zum Erzeugen des Hologramms eine Laserstrahlung mittels einer Powell-Linse auf ein linienförmiges Profil gebracht. Die derart geformte Laserstrahlung wird anschließend mittels einer Linse auf das holografische Aufzeichnungsmaterial und den Hologrammmaster geführt. Die linienförmige Laserstrahlung wird mittels eines drehbaren Spiegels eines im Strahlengang angeordneten Scanners schrittweise über den Hologrammmaster und das holografische Aufzeichnungsmaterial geführt ("gescannt"). Um einen Bereich zu begrenzen, in dem eine Belichtung stattfindet, befindet sich im Strahlengang vor dem holografischen Aufzeichnungsmaterial und dem Hologrammmaster zusätzlich eine Blende. Auf diese Weise können beispielsweise kreisförmige oder quadratische Belichtungsbereiche geschaffen werden, die eine Belichtung begrenzen.

Das beschriebene Verfahren ist jedoch aufwändig und langsam, da stets ein schrittweises Belichten des zu kopierenden Bereichs notwendig ist. Ferner ist das Verfahren aufgrund einer Vielzahl von optischen Komponenten kostspielig und fehleranfällig.

Der Erfindung liegt die Aufgabe zu Grunde, eine Vorrichtung und ein Verfahren zum Erzeugen eines Hologramms zu schaffen, bei denen das Erzeugen verbessert durchgeführt werden kann.

Aus der US 2014/0055830 A1 sind eine Phasenmaske und eine Hologrammaufzeichnungsvorrichtung mit einer Phasenmaske zur Strahlformung bekannt. Die Phasenmaske enthält eine Phasenmodulationsschicht, die eine Phase verschiedener Teile des einfallenden Lichts unterschiedlich moduliert, so dass eine unterschiedliche optische Phasenverzögerung in einem Bereich zwischen 0 und 2 pi verschiedenen Teilen des einfallenden Lichts verliehen wird. Eine Hologrammaufzeichnungsvorrichtung umfasst eine Lichtquelle; ein optisches Signalstrahlsystem, das einen von der Lichtquelle emittierten Strahl in einen Referenzstrahl und einen Signalstrahl unterteilt, den Signalstrahl gemäß der Hologrammpixelinformation moduliert und den Signalstrahl auf ein Hologrammaufzeichnungsmedium strahlt. Das optische Signalstrahlsystem enthält die Phasenmaske. Die Hologrammaufzeichnungsvorrichtung enthält auch ein optisches Referenzstrahlsystem, das den Referenzstrahl auf das Hologrammaufzeichnungsmedium strahlt.

Aus der DE 10 2015 220 123 A1 sind bekannt: ein Verfahren zum Herstellen eines Masterhologramms für ein Kontaktkopierverfahren, ein solches Masterhologramm sowie ein Verfahren zum Herstellen von individualisierten Hologrammen und individualisierte Hologramme, die mit einem solchen Masterhologramm im Kontaktkopierverfahren hergestellt sind. Das Verfahren zum Herstellen eines Masterhologramms umfasst die Schritte: Anordnen eines diffusen Streuers, einer Blende, einer Fourier-Linse und eines holografischen Aufzeichnungsmaterials auf einer optischen Anordnungsachse, sodass eine optischen Achse der Fourier-Linse, eine Oberflächennormale des holografischen Aufzeichnungsmaterials und eine Oberflächennormale einer Blendenöffnungsebene der Blende kollinear zur optischen Anordnungsachse sind, wobei die Blende zwischen dem diffusen Streuer und der Fourier-Linse unmittelbar an den diffusen Streuer angrenzend angeordnet wird und der diffuse Streuer in einer Brennebene der Fourier-Linse angeordnet wird und kohärentes erstes Licht auf den diffusen Streuer eingestrahlt wird, um hierdurch das diffus gestreute Licht zu erzeugen, welches mittels der Blende eingegrenzt und mittels der Fourier-Linse in das holografische Aufzeichnungsmaterial als Objekt-Licht geleitet wird und zu dem ersten kohärenten Licht kohärentes zweites kohärentes Licht von einer der Fourier-Linse abgewandten Seite in das holografische Aufzeichnungsmaterial als Referenzlicht eingestrahlt wird, um in dem holografischen Aufzeichnungsmaterial ein Reflexionsvolumenhologramm auszubilden. Das Dokument offenbart darüberhinaus die Verwendung eines Strahlenformungselements zur Ausleuchtung eines räumlichen Lichtmodulators.

Aus der DE 10 2012 215 540 A1 ist eine Individualisierungseinrichtung bekannt, die ausgebildet ist, Licht einer Lichtquelle aus einer Empfangsrichtung zu empfangen und räumlich moduliertes Licht unter einer Ausgaberichtung für eine Holgrammbelichtung auszugeben, umfassend einen räumlichen Lichtmodulator, und eine Strahlführungsoptik, um das Licht der Lichtquelle auf den räumlichen Lichtmodulator zu führen und das von dem räumlichen Lichtmodulator modulierte Licht wegzuführen, wobei eine Oberflächennormale des räumlichen Lichtmodulators zumindest gegenüber einer Oberflächennormale einer ersten Grenzfläche einer Komponente der Strahlführungsoptik verkippt ist, die das modulierte Licht nach der Modulation an dem räumlichen Lichtmodulator passiert. Ferner ist eine Belichtungseinrichtung für Hologramme bekannt, die eine solche Individualisierungseinrichtung umfasst.

Aus Xin Tan et al., Diffractive phase elements for beam shaping: a new design method, Applied Optics, Optical Society of America, Washington D.C., USA, Bd. 34, Nr. 8, 10. März 1995, S. 1314-1320, ISSN: 0003-6935, sind Diffraktive Phasenelemente zur Strahlformung bekannt.

Aus WO2011070350 ist bekannt mehrere holographische Pixel mit Hilfe eines holographischen optischen Elements, zur Zeitersparnis, gleichzeitig zu beleuchten.

Die Aufgabe wird erfindungsgemäß durch eine Vorrichtung mit den Merkmalen des Patentanspruchs 1 und ein Verfahren mit den Merkmalen des Patentanspruchs 8 gelöst. Vorteilhafte Ausgestaltungen der Erfindung ergeben sich aus den Unteransprüchen.

### Definitionen

Als Wert- oder Sicherheitsdokument werden jene Gegenstände bezeichnet, die mindestens ein Sicherheitsmerkmal aufweisen. Beispielhaft sind als Sicherheitsdokumente genannt: Personalausweise, Reisepässe, ID-Karten, Zugangskontrollausweise, Visa, Steuerzeichen, Tickets, Führerscheine, Kraftfahrzeugpapiere, Wertdokumente, wie Banknoten, Schecks, Postwertzeichen, Kreditkarten, beliebige Chipkarten und Haftetiketten (z.B. zur Produktsicherung).

Als Diffraktives Optisches Element wird ein optisches Element bezeichnet, das ein optisches Gitter umfasst, und das unter Ausnutzung von Beugungseffekten an diesem optischen Gitter eine Strahlformung vornimmt. Insbesondere handelt es sich bei einem Diffraktiven Optischen Element um Glasträger, auf dessen Oberflächen Mikrostrukturen aufgebracht sind, welche das optische Gitter ausbilden. Durch die Mikrostrukturen weisen einzelne Teilstrahlen unterschiedliche Weglängen auf, sodass es zu Phasenmodulationen kommt, die zu Interferenzmustern führen können. Durch konstruktive und destruktive Überlagerung wird zusätzlich eine Amplitude moduliert. Durch gezieltes Ausbilden der Mikrostrukturen kann eine durch das Diffraktive Optische Element transmittierte Laserstrahlung in seiner Form und in seiner Intensität verändert und eingestellt werden, insbesondere mit Bezug auf eine Fokusebene. Die optisch wirksamen Mikrostrukturen können mittels einer Modulation des Brechungsindex und/oder mittels einer Modulation eines Höhenprofils der Oberfläche erzeugt werden.

Als holografisches Aufzeichnungsmaterial wird jedes Material bezeichnet, welches geeignet ist, um darin ein Volumenhologramm einzubelichten. Insbesondere kann ein holografisches Aufzeichnungsmaterial ein Hologrammfilm sein. Insbesondere eignen sich auf Fotopolymerbasis hergestellte Hologrammfilme. Es können jedoch auch Hologrammfilme verwendet werden, die auf Silberhalogenidbasis hergestellt sind, insbesondere gebleichte Silberhalogenidfilme. Andere Materialien sind Dichromatgelantine oder photorefraktive Kristalle. Es wird im Folgenden jeweils davon ausgegangen, dass das holografische Aufzeichnungsmaterial bzw. ein Hologrammmaster oder Masterhologramm jeweils glatt flächig und eben ausgebildet sind. Kleinere Abweichungen zur Beseitigung von Abbildungsfehlern oder Ähnlichem sind hiervon nicht berührt.

Ein Hologrammmaster ist ein Muster, von dem ein Hologramm hergestellt wird. Ein solcher Hologrammmaster kann beispielsweise ein Masterhologramm, ein Spiegel oder ein Gitter sein. Ein Masterhologramm ist ein als Hologramm ausgebildeter Hologrammmaster. Beispielsweise dient eine Mattscheibe im Stand der Technik als Hologrammmaster. Das davon in Kontaktkopie hergestellte Volumenreflexionshologramm stellt ein Masterhologramm dar, welches im Kontaktkopierverfahren zur Herstellung individualisierter Sicherheitselemente als Hologrammmaster eingesetzt werden kann. Dieses Masterhologramm ist dann in dem Kontaktkopierverfahren auch der Hologrammmaster für die individualisiert hergestellten Sicherheitselemente, die jeweils ein individualisiertes Volumenhologramm besitzen, welches von dem Masterhologramm im Kontaktkopierverfahren räumlich selektiert kopiert ist.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Eine Grundidee der Erfindung ist, einen optischen Aufbau einer Vorrichtung zum Erzeugen des Hologramms zu vereinfachen. Hierzu wird insbesondere auf die Powell-Linse, den Scanner, weitere Linsen und die Blende im Strahlengang verzichtet. Hingegen wird ein Diffraktives Optisches Element eingesetzt. Das Diffraktive Optische Element wird hierbei derart ausgebildet bzw. ausgewählt, dass ein Belichtungsbereich mit dem zum Erzeugen des Hologramms zu belichtenden Bereich korrespondiert. Korrespondieren bedeutet hierbei, dass der Bereich, der belichtet wird, hinsichtlich einer Form und einer Größe bzw. Fläche mit dem zu erzeugenden, zu kopierenden, Teil übereinstimmt. Es kann hierbei jedoch auch vorgesehen sein, dass nicht der gesamte Hologrammmaster ausgeleuchtet wird, sondern nur der Teil bzw. Bereich, mittels dessen ein Hologramm erzeugt bzw. kopiert werden soll. Soll beispielsweise ein kreisförmiger Bereich kopiert werden, so wird das Diffraktive Optische Element derart ausgebildet, dass die in der Fokusebene des Diffraktiven Optischen Elements abgestrahlte Laserstrahlung diesem kreisförmigen Bereich entspricht. Soll hingegen ein quadratischer Belichtungsbereich belichtet werden, beispielsweise, weil das zu erzeugende oder zu kopierende Hologramm eine quadratische Form aufweist, so wird das Diffraktive Optische Element derart ausgebildet bzw. ausgewählt, dass die in den Belichtungsbereich abgestrahlte bzw. transmittierte Laserstrahlung diesem quadratischen Bereich entspricht. Auf diese Weise kann das zu erzeugende, insbesondere zu kopierende, Hologramm über die gesamte Fläche in einem einzigen Belichtungsschritt erzeugt bzw. kopiert werden. Insbesondere wird eine Vorrichtung zum Erzeugen eines Hologramms entsprechend Anspruch 1 geschaffen.

Ferner wird ein Verfahren zum Erzeugen eines Hologramms entsprechend Anspruch 8 zur Verfügung gestellt.

Der Vorteil der Vorrichtung und des Verfahrens ist, dass auf eine Powell-Linse, einen Scanner, eine Linse und eine Blende zur Strahlformung verzichtet werden kann. Dies ermöglicht einen deutlich vereinfachten Aufbau der Vorrichtung bzw. ein vereinfachtes Verfahren, da insbesondere eine Justierung der optischen Anordnung weniger aufwändig ausgestaltet werden kann. Insgesamt können Kosten und Aufwand eingespart werden. Darüber hinaus reduziert sich aufgrund der geringeren Anzahl an Bauteilen der optischen Anordnung auch eine Fehleranfälligkeit, sodass die Vorrichtung und das Verfahren robuster sind.

Das Diffraktive Optische Element ist derart ausgebildet, in der Fokusebene die von der Laserstrahlungsquelle ausgesandte und durch das Diffraktive Optische Element transmittierte Laserstrahlung auf mindestens eine weitere Einstrahlebene in dem Strahlengang der optischen Anordnung abzubilden und hierdurch mindestens einen weiteren Belichtungsbereich zu bestrahlen, der mit einem zum Erzeugen eines weiteren Hologramms zu belichtenden weiteren Bereich des holografischen Aufzeichnungsmaterials korrespondiert. Hierdurch wird es möglich, mehrere Belichtungsbereiche getrennt voneinander, jedoch gleichzeitig zu belichten und auf diese Weise beispielsweise mehrere Hologramme gleichzeitig für unterschiedliche Wert- oder Sicherheitsdokumente zu erzeugen bzw. zu kopieren. Hierdurch können beispielsweise mehrere Wert- oder Sicherheitsdokumente auf einem Mehrfachnutzen in einem einzigen Arbeitsschritt jeweils mit einem Hologramm versehen werden, da alle Hologramme gleichzeitig erzeugt bzw. kopiert werden können. Hierdurch kann ein Ablauf vereinfacht werden.

Es kann auch vorgesehen sein, dass mehrere verschiedene Hologramme für ein einzelnes Wert- oder Sicherheitsdokument gleichzeitig erzeugt bzw. kopiert werden.

Das Diffraktive Optische Element ist dann entsprechend zum Belichten von mehreren korrespondierenden Belichtungsbereichen ausgelegt.

Die konkrete Ausbildung der Mikrostrukturen des Diffraktiven Optischen Elements wird in Abhängigkeit der angestrebten Lage der Fokusebene des Diffraktiven Optischen Elements und in Abhängigkeit des zu belichtenden Bereichs bzw. des Belichtungsbereichs vorgenommen. Hierzu wird eine Rückwärtsrechnung ausgehend von der Form und der Größe des zu belichtenden Bereichs vorgenommen, um die beugenden Mikrostrukturen auszubilden. Anders ausgedrückt wird durch Simulation eine konkrete Position und eine konkrete Form der Mikrostrukturen auf der Oberfläche des Glasträgers des Diffraktiven Optischen Elements derart aufgefunden, dass sich in der Fokusebene das gewünschte Bild der durch das Diffraktive Optische Element transmittierten Laserstrahlung für die Einstrahlebene, und hierdurch insbesondere für den Belichtungsbereich, ergibt. Das Diffraktive Optische Element wird dann durch Ausbilden der berechneten Mikrostrukturen auf der Oberfläche eines Glasträgers hergestellt. Hierzu werden die berechneten Mikrostrukturen durch mehrere sukzessiv aufeinanderfolgende Ätzschritte ausgebildet. Ein Hersteller von Diffraktiven Optischen Elementen ist beispielsweise die Firma HOLO/OR Ltd. in Israel (http://www.holoor.co.il/).

Im einfachsten Fall wird die von dem Diffraktiven Optischen Element transmittierte Laserstrahlung direkt auf den Belichtungsbereich geführt. Dann fällt die Einstrahlebene mit der Ebene, in der das Hologramm erzeugt werden soll, zusammen. Sind zwischen dem Diffraktiven Optischen Element optische Bauteile angeordnet, muss die Einstrahlebene gegebenenfalls mit einer anderen Ebene zusammenfallen und das Diffraktive Optische Element entsprechend ausgebildet sein oder ausgewählt werden. Die Masteraufnahme ist beispielsweise als Halteelement, Fassung oder Tisch zum Aufnehmen und/oder Halten des holografischen Aufzeichnungsmaterials und des Hologrammmasters ausgebildet.

Es kann insbesondere vorgesehen sein, dass das erzeugte bzw. kopierte Hologramm als Sicherheitsmerkmal in einem Wert- oder Sicherheitsdokument eingesetzt wird.

Je nach Form des zu erzeugenden oder zu kopierenden Hologramms kann der zu belichtende Bereich in Bezug auf Form, Größe und/oder Belichtungsintensität variieren. In einer Ausführungsform ist deshalb vorgesehen, dass das Diffraktive Optische Element derart ausgebildet ist, dass eine Strahlform und/oder ein Intensitätsprofil der transmittierten Laserstrahlung auf den zu belichtenden Bereich abgestimmt ist.

Es kann vorgesehen sein, dass ein Hologramm unter einem bestimmten Winkel rekonstruiert bzw. in dem holographischen Auszeichnungsmaterial erzeugt werden soll. In einer Ausführungsform ist deshalb vorgesehen, dass die optische Anordnung einen Spiegel umfasst, wobei der Spiegel derart ausgebildet und angeordnet ist, dass die Laserstrahlung in Bezug auf eine Flächennormale des zu belichtenden holografischen Aufzeichnungsmaterials unter einem Winkel auf dieses abgebildet werden kann. Beträgt ein solcher Winkel beispielsweise 45°, so wird der Spiegel entsprechend in den Strahlengang auf der optischen Achse zwischen das Diffraktive Optische Element und der Masteraufnahme angeordnet. Die Ausrichtung erfolgt dann derart, dass die an dem Spiegel reflektierte transmittierte Laserstrahlung unter einem Winkel von 45° auf das holografische Auszeichnungsmaterial und den Hologrammmaster trifft.

Es kann hierbei insbesondere vorgesehen sein, dass das Diffraktive Optische Element derart ausgebildet ist bzw. hergestellt oder ausgewählt wurde, dass eine aufgrund der Belichtung unter einem Winkel auftretende Verzerrung bzw. Stauchung/Streckung des Strahlprofils berücksichtigt wird. Wäre eine Strahlform bzw. ein Intensitätsprofil nach der Transmission durch das Diffraktive Optische Element beispielsweise kreisförmig, so wäre der belichtete Bereich nach einer Spiegelung an einem Spiegel unter einem Winkel von 45° in Bezug auf die Flächennormale des holografischen Aufzeichnungsmaterials bzw. des Hologrammmasters ellipsenförmig. Dies kann jedoch durch entsprechende Berücksichtigung beim Ausbilden des Diffraktiven Optischen Elements berücksichtigt werden, sodass trotz der Spiegelung eine Belichtung mit kreisförmiger Strahlform bzw. kreisförmigem Intensitätsprofil stattfinden kann.

Es kann gewünscht sein, Hologramme unter verschiedenen Winkeln in ein holographisches Aufzeichnungsmaterial zu kopieren. In einer Ausführungsform ist daher vorgesehen, dass der Spiegel in seiner Position verstellbar ausgebildet ist und/oder mindestens eine Achse des Spiegels drehbar ausgebildet ist, sodass der Winkel veränderbar ist. Hierdurch kann die Vorrichtung flexibel an wechselnde Anforderungen, d.h. wechselnde Winkel, angepasst werden, sodass Umrüst- und Standzeiten der Vorrichtung verringert werden können.

Im Verfahren kann ein entsprechend vorgesehen sein, dass der Spiegel positioniert und der Winkel eingestellt wird.

Es kann gewünscht sein, Hologramme zu individualisieren, beispielsweise indem die Hologramme mit einer individualisierten Nummer oder einem individuellen Bild versehen werden. In einer Ausführungsform ist deshalb vorgesehen, dass die optische Anordnung einen im Strahlengang angeordneten Spatial Light Modulator (SLM) umfasst, wobei der Spatial Light Modulator derart ausgebildet ist, das zu erzeugende Hologramm zu individualisieren, wobei die Einstrahlebenen mit einer Einkopplungsebene des Spatial Light Modulators zusammenfallen.

Der SLM wird dann hinter das Diffraktive Optische Element angeordnet. Die durch den SLM modulierte Laserstrahlung wird dann beispielsweise über eine Abbildungsoptik auf den Belichtungsbereich abgebildet und durch entsprechende Ansteuerung des SLM individualisiert.

Insbesondere ist in einer Ausführungsform vorgesehen, dass der Spatial Light Modulator ein Liquid-Crystal-on-Silicon-Modulator ist.

In einer Ausführungsform ist vorgesehen, dass das Diffraktive Optische Element derart ausgebildet ist, einen Transmissionsgrad von mindestens 99 % und einen Wirkungsgrad von mindestens 97 % aufzuweisen. Dies erfolgt, indem beim Herstellen des Diffraktiven Optischen Elements mindestens 32 Ätzstufen verwendet werden, das heißt dass mindestens 5 Ätzschritte durchgeführt werden. Hierdurch lässt sich ein Wirkungsgrad gegenüber der aus dem Stand der Technik bekannten Vorrichtungen deutlich steigern. Das Kopieren von Hologrammen kann hierdurch effizienter und kostengünstiger durchgeführt werden.

Die Vorteile des Verfahrens sind dieselben wie die der Vorrichtung.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Vorrichtung zum Erzeugen eines Hologramms aus dem Stand der Technik;
- Fig. 2: eine schematische Darstellung einer weiteren Vorrichtung zum Erzeugen eines individualisierten Hologramms aus dem Stand der Technik;
- Fig. 3: eine schematische, teilweise Darstellung einer Ausführungsform der Vorrichtung zum Erzeugen eines Hologramms;
- Fig. 4: eine schematische, teilweise Darstellung einer weiteren Ausführungsform der Vorrichtung zum Erzeugen eines Hologramms;
- Fig. 5: eine schematische, teilweise Darstellung einer weiteren Ausführungsform der Vorrichtung zum Erzeugen eines individualisierten Hologramms;
- Fig. 6: ein schematisches Ablaufdiagramm einer Ausführungsform des Verfahrens zum Erzeugen eines Hologramms.

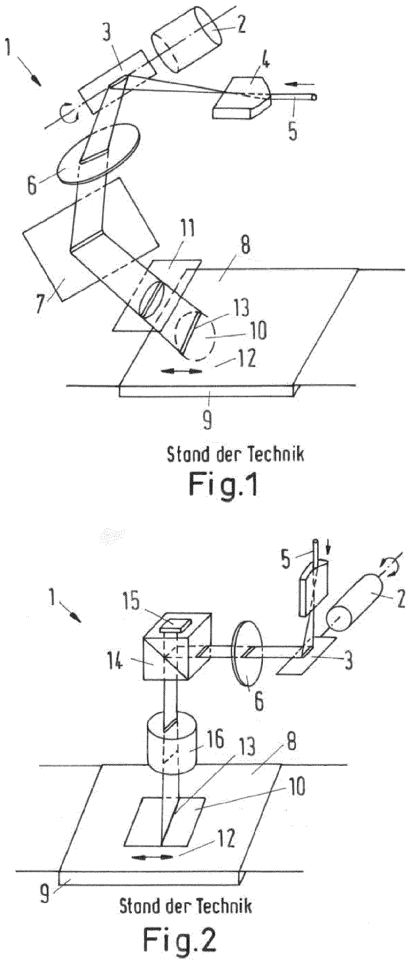

In Fig. 1 ist eine schematische Darstellung einer Vorrichtung 1 zum Erzeugen bzw.

Kopieren eines Hologramms in Kontaktkopie aus dem Stand der Technik gezeigt. Die Vorrichtung 1 umfasst einen Scanner 2 mit einem drehbaren Spiegel 3 und eine Powell-Linse 4, welche aus einer Laserstrahlung 5 mit kreisrundem Intensitätsprofil ein Linienprofil erzeugt. Dieses Linienprofil wird über den drehbaren Spiegel 3 und eine Linse 6 sowie einen weiteren Spiegel 7 auf ein holografisches Aufzeichnungsmaterial 8 und einen darunter angeordneten und als Masterhologramm ausgebildeten Hologrammmaster 9 abgebildet. Hierbei wird der Belichtungsbereich 10, der mittels der Laserstrahlung 5 in das holografische Aufzeichnungsmaterial 8 kopiert werden soll, mittels einer Blende 11 in seiner Ausdehnung begrenzt, wobei die Blende 11 im vorliegenden Beispiel kreisförmig ausgebildet ist. Ein flächiges Kopieren bzw. ein flächiges Belichten des Belichtungsbereichs 10 erfolgt nun sequentiell durch Scannen mittels des drehbaren Spiegels 3 des Scanners 2, sodass die linienförmige Abbildung 13 der Laserstrahlung 5 entlang einer Scanrichtung 12 über das holografische Aufzeichnungsmaterial 8 und den Hologrammmaster 9 hinwegbewegt wird. Hierdurch wird das Hologramm für den Belichtungsbereich 10 im Hologrammmaster 9 rekonstruiert und in das holografische Aufzeichnungsmaterial 8 hineinbelichtet.

In Fig. 2 ist eine schematische Darstellung einer weiteren Vorrichtung 1 zum Erzeugen eines individualisierten Hologramms aus dem Stand der Technik gezeigt. Gleiche Bezugszeichen in den Figuren bezeichnen hierbei gleiche Merkmale. Im Gegensatz zu der in der Fig. 1 gezeigten Vorrichtung 1 umfasst die in der Fig. 2 gezeigte Vorrichtung 1 zusätzlich einen polarisierenden Strahlteiler 14, an dessen Oberseite ein Spatial Light Modulator 15 in Form eines LCoS angeordnet ist. Die örtlich durch eine Drehung einer Polarisation der Laserstrahlung 5 und anschließende Filterung durch den Strahlteiler 14 auf Grundlage einer Individualisierungsinformation (z.B. ein Graustufenbild einer Person) modulierte Laserstrahlung 5 wird mit Hilfe einer Abbildungsoptik 16 auf das holographische Aufzeichnungsmaterial 8 und den Hologrammmaster 9 geleitet. Das flächige Belichten erfolgt wie bei dem in Fig. 1 gezeigten Beispiel durch Scannen mittels des drehbaren Spiegels 3 des Scanners 2. Hierdurch wird das individualisierte Hologramm in dem holographischen Aufzeichnungsmaterial 8 erzeugt.

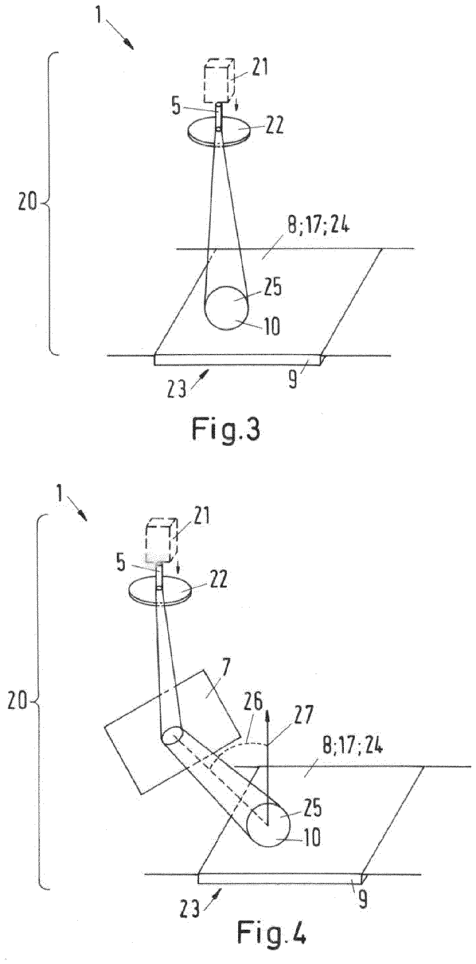

In Fig. 3 ist eine schematische, teilweise Darstellung einer Ausführungsform der erfindungsgemäßen Vorrichtung 1, entsprechend Anspruch 1, zum Erzeugen eines Hologramms mit einem Hologrammmaster, insbesondere in Kontaktkopie gezeigt. Die Vorrichtung 1 umfasst eine optische Anordnung 20, wobei die optische Anordnung 20 eine Laserstrahlungsquelle 21, ein Diffraktives Optisches Element 22 und eine Masteraufnahme 23 umfasst. Die Masteraufnahme 23 ist als Halteelement oder Fassung zum Aufnehmen und Halten des holografischen Aufzeichnungsmaterials 8 und des Hologrammmasters 9 ausgebildet.

Der Hologrammmaster 9 ist in der gezeigten Ausführungsform insbesondere ein Masterhologramm.

Im Gegensatz zu den Vorrichtungen 1 im Stand der Technik weist die Vorrichtung 1 in der gezeigten Ausführungsform keine Powell-Linse, keinen Scanner, keine Linse und keine Blende auf.

Das Diffraktive Optische Element 22 ist derart ausgebildet, dass in einer Fokusebene 24 eine von der Laserstrahlungsquelle 21 ausgesandte und durch das Diffraktive Optische Element 22 transmittierte Laserstrahlung 5 auf eine Einstrahlebene 17 in einem Strahlengang der optischen Anordnung 20 abgebildet und hierdurch ein Belichtungsbereich 10 bestrahlt wird, der mit einem zum Erzeugen des Hologramms zu belichtenden Bereich 25 des holografischen Aufzeichnungsmaterials korrespondiert. Die Einstrahlebene 17 entspricht in dieser Ausführungsform der Ebene, in der das holographische Aufzeichnungsmaterial 8 angeordnet ist. Der durch die Strahlformung des Diffraktiven Optischen Elements 22 bestrahlte Belichtungsbereich 10 entspricht daher genau dem Bereich 25, in dem das Hologramm von dem Hologrammmaster 9 in das holografische Aufzeichnungsmaterial 8 kopiert werden soll. Im gezeigten Ausführungsbeispiel ist dies eine kreisförmige Fläche. Vorzugsweise ist das Intensitätsprofil homogen ausgebildet ("Flat-top hat"-Profil).

In Fig. 4 ist eine schematische, teilweise Darstellung einer weiteren erfindungsgemäßen Ausführungsform der Vorrichtung 1, entsprechend Anspruch 1, zum Erzeugen eines Hologramms mit einem Hologrammmaster, insbesondere in Kontaktkopie gezeigt. Die Vorrichtung 1 basiert auf der in Fig. 3 gezeigten Ausführungsform. Gleiche Bezugszeichen in den Figuren bezeichnen hierbei gleiche Merkmale. Zusätzlich umfasst die optische Anordnung 20 noch einen positionierbaren und drehbaren Spiegel 7, über den die durch das Diffraktive Optische Element 20 transmittierte Laserstrahlung 5 unter einem Winkel 26 zur Flächennormalen 27 des holografischen Aufzeichnungsmaterials 8 bzw. des Hologrammmasters 9 auf den Belichtungsbereich 10 abgebildet wird. Hierdurch wird ein Belichten bzw. ein Kopieren des Hologramms unter einem Winkel 26 ermöglicht.

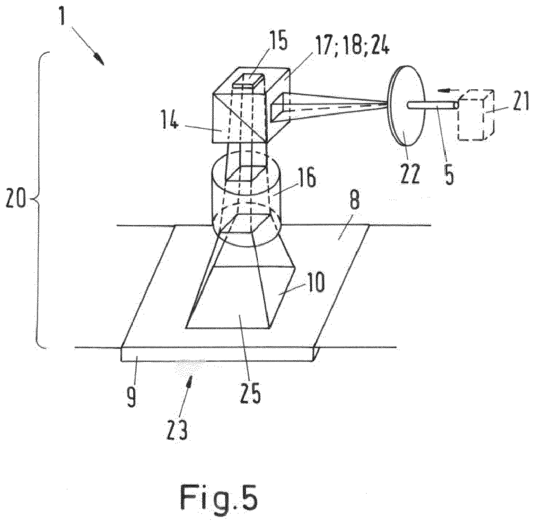

Fig. 5 zeigt eine schematische, teilweise Darstellung einer weiteren erfindungsgemäßen Ausführungsform der Vorrichtung 1, entsprechend Anspruch 1, zum Erzeugen eines Hologramms mit einem Hologrammmaster, insbesondere eines individualisierten Hologramms. Gleiche Bezugszeichen in den Figuren bezeichnen hierbei gleiche Merkmale. Die optische Anordnung 20 umfasst im Strahlengang neben der Laserstrahlungsquelle 21, dem Diffraktiven Optischen Element 22 und der Masteraufnahme 23 einen polarisierenden Strahlteiler 14, an dessen Oberseite ein Spatial Light Modulator 15 in Form eines LCoS angeordnet ist. Die durch den Spatial Light Modulator 15 örtlich modulierte Laserstrahlung 5 wird mit Hilfe einer Abbildungsoptik 16 der optischen Anordnung 20 auf das holographische Aufzeichnungsmaterial 8 und den Hologrammmaster 9 geleitet.

Die Einstrahlebene 17 fällt in dieser Ausführungsform mit einer Einkopplungsebene 18 des Spatial Light Modulators 15 zusammen, d.h. das Diffraktive Optische Element 22 ist derart ausgebildet, dass sich die Fokusebene 24 des Diffraktiven Optischen Elements 22 in der Einkopplungsebene 18 befindet. Die durch das Diffraktive Optische Element 22 transmittierte Laserstrahlung 5 wird daher auf den Spatial Light Modulator 15 bzw. dessen Einkopplungsebene 18 abgebildet.

Die von dem SLM 15 bzw. LCoS örtlich modulierte, insbesondere mit einer Individualisierungsinformation versehene Laserstrahlung 5 wird anschließend mit Hilfe der Abbildungsoptik 16 auf einen Belichtungsbereich 10 abgebildet, der mit einem zu belichtenden Bereich 25 korrespondiert. Der durch die Strahlformung des Diffraktiven Optischen Elements 22 bestrahlte Belichtungsbereich 10 entspricht somit genau dem Bereich 25 des holografischen Aufzeichnungsmaterials, in dem das Hologramm (individualisiert) erzeugt bzw. kopiert werden soll. Im gezeigten Ausführungsbeispiel ist dies eine quadratische Fläche. Vorzugsweise ist das Intensitätsprofil der Laserstrahlung 5 in der Fokusebene 24 bzw. in dem Belichtungsbereich 10 hierbei homogen über die gesamte Fläche ausgebildet, sodass ein gleichmäßiges Belichten bzw. Kopieren möglich ist.

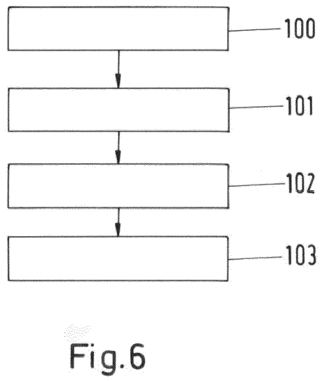

In Fig. 6 ist ein schematisches Ablaufdiagramm des erfindungsgemäßen Verfahrens zum Erzeugen eines Hologramms dargestellt.

In einem ersten Verfahrensschritt 100 wird ein Diffraktives Optisches Element 22 (vgl. z.B. Fig. 3) ausgewählt und bereitgestellt. Das Diffraktive Optische Element 22 korrespondiert hierbei mit der verwendeten Laserstrahlung 5, insbesondere in Bezug auf eine Wellenlänge der Laserstrahlung 5, und insbesondere mit dem zu erzeugenden, insbesondere zu kopierenden, Hologramm bzw. dem Hologrammmaster 9. Es kann zusätzlich vorgesehen sein, dass die Laserstrahlung 5 vor dem Diffraktiven Optischen Element 22 aufgeweitet wird, um hierdurch ein Strahlprofil der durch das Diffraktive Optische Element 22 transmittierten Laserstrahlung 5 homogener zu gestalten. Das Diffraktive Optische Element 22 ist derart ausgebildet, dass beim nachfolgenden Belichten genau die Bereiche bestrahlt werden, in denen Hologramme erzeugt bzw. kopiert werden sollen.

Das ausgewählte und bereitgestellte Diffraktive Optische Element 22 wird in einen Strahlengang einer optischen Anordnung 20 der Vorrichtung 1 angeordnet.

In einem Verfahrensschritt 101 wird ein Hologrammmaster 9 und ein zu belichtendes holografisches Aufzeichnungsmaterial 8 in einer Masteraufnahme 23 angeordnet. Die Masteraufnahme 23 ist beispielsweise als ebener Tisch ausgebildet, auf der der Hologrammmaster 9 und das holografische Aufzeichnungsmaterial 8 aufgelegt werden und in einer vorgegebenen Position aufeinander angeordnet werden. Es kann auch vorgesehen sein, dass das holografische Aufzeichnungsmaterial 8 auf den Hologrammmaster 9 auflaminiert ist oder wird. Ferner kann auch vorgesehen sein, dass das holografische Aufzeichnungsmaterial 8 an den Hologrammmaster 23 angedrückt und/oder angesaugt wird, damit beide möglichst eng aneinander angeordnet sind und sich insbesondere keine Lufteinschlüsse dazwischen befinden.

Im nächsten Verfahrensschritt 102 wird Laserstrahlung 5 mittels einer Laserstrahlungsquelle 21 erzeugt. Hierbei ist die Wellenlänge der Laserstrahlung 5 auf die zu erzeugenden Hologramme bzw. das zu rekonstruierende Hologramm des Hologrammmasters 9 abgestimmt.

Im Verfahrensschritt 103 wird die erzeugte Laserstrahlung auf das Diffraktive Optische Element 22 eingestrahlt und hierdurch in Belichtungsbereichen 10 Hologramme erzeugt bzw. aus dem Hologrammmaster 9 in das holografische Aufzeichnungsmaterial 8 kopiert.

### Bezugszeichenliste

- 1: Vorrichtung
- 2: Scanner
- 3: Spiegel
- 4: Powell-Linse
- 5: Laserstrahlung
- 6: Linse
- 7: Spiegel
- 8: holografisches Aufzeichnungsmaterial
- 9: Hologrammmaster
- 10: Belichtungsbereich
- 11: Blende
- 12: Scanrichtung
- 13: linienförmige Abbildung
- 14: polarisierender Strahlteiler
- 15: Spatial Light Modulator
- 16: Abbildungsoptik
- 17: Einstrahlebene
- 18: Einkopplungsebene
- 20: optische Anordnung
- 21: Laserstrahlungsquelle
- 22: Diffraktives Optisches Element
- 23: Masteraufnahme
- 24: Fokusebene
- 25: Bereich
- 26: Winkel
- 27: Flächennormale
- 100-103: Verfahrensschritte

## Patentansprüche

1. Vorrichtung (1) zum Erzeugen eines Hologramms mit einem Hologrammmaster (9), umfassend:
eine optische Anordnung (20),
wobei die optische Anordnung (20) entlang einer optischen Achse mindestens eine Laserstrahlungsquelle (21), ein Diffraktives Optisches Element (22) und eine Masteraufnahme (23) aufweist, wobei die Masteraufnahme (23) dazu eingerichtet ist, dass in oder auf dieser ein zu belichtendes holografisches Aufzeichnungsmaterial (8) und der Hologrammmaster (9) angeordnet werden können,und
wobei das Diffraktive Optische Element (22) derart ausgebildet ist, eine von der Laserstrahlungsquelle (21) ausgesandte und durch das Diffraktive Optische Element (22) transmittierte Laserstrahlung (5) in Bezug auf eine Fokusebene (24) des Diffraktiven Optischen Elements (22) in seiner Form und seiner Intensität zu verändern und einzustellen und auf eine Einstrahlebene (17) in einem Strahlengang der optischen Anordnung (20) abzubilden und hierdurch einen ersten Belichtungsbereich (10) zu bestrahlen, der mit einem zum Erzeugen des Hologramms zu belichtenden Bereich (25) des holografischen Aufzeichnungsmaterials (8) korrespondiert,
wobei das Diffraktive Optische Element (22) ferner derart ausgebildet ist, die von der Laserstrahlungsquelle (21) ausgesandte und durch das Diffraktive Optische Element (22) transmittierte Laserstrahlung (5) in Bezug auf die Fokusebene (24) in seiner Form und seiner Intensität zu verändern und einzustellen und auf mindestens eine weitere Einstrahlebene (17) in dem Strahlengang der optischen Anordnung (20) abzubilden und hierdurch mindestens einen weiteren Belichtungsbereich, räumlich getrennt vom ersten Belichtungsbereich auf dem holografischen Aufzeichnungsmaterial (8), zu bestrahlen, der mit einem zum Erzeugen eines weiteren Hologramms zu belichtenden weiteren Bereich des holografischen Aufzeichnungsmaterials (8) korrespondiert.

2. Vorrichtung (1) nach Anspruch 1, **dadurch gekennzeichnet, dass** das Diffraktive Optische Element (22) derart ausgebildet ist, dass ein Intensitätsprofil der transmittierten Laserstrahlung (5) auf die zu belichtenden Bereiche (25) abgestimmt ist.

3. Vorrichtung (1) nach Anspruch 1 oder 2, **dadurch gekennzeichnet, dass** die optische Anordnung (20) einen Spiegel (7) umfasst, wobei der Spiegel (7) derart ausgebildet und angeordnet ist, dass die Laserstrahlung (5) in Bezug auf eine Flächennormale (27) des zu belichtenden holografischen Aufzeichnungsmaterials (8) unter einem Winkel (26) auf dieses abgebildet werden kann.

4. Vorrichtung (1) nach Anspruch 3, **dadurch gekennzeichnet, dass** der Spiegel (7) in seiner Position verstellbar ausgebildet ist und/oder mindestens eine Achse des Spiegels (7) drehbar ausgebildet ist, sodass der Winkel (7) veränderbar ist.

5. Vorrichtung (1) nach einem der vorangegangenen Ansprüche, **dadurch gekennzeichnet, dass** die optische Anordnung (20) einen im Strahlengang angeordneten Spatial Light Modulator (15) umfasst, wobei der Spatial Light Modulator (15) derart ausgebildet ist, das zu erzeugende Hologramm zu individualisieren, wobei die Einstrahlebenen (17) mit einer Einkopplungsebene (18) des Spatial Light Modulators (15) zusammenfallen.

6. Vorrichtung (1) nach Anspruch 5, **dadurch gekennzeichnet, dass** der Spatial Light Modulator (15) ein Liquid-Crystal-on-Silicon-Modulator ist.

7. Vorrichtung (1) nach einem der vorangegangenen Ansprüche, **dadurch gekennzeichnet, dass** das Diffraktive Optische Element (22) mindestens 32 Ätzstufen aufweist, sodass das Diffraktive Optische Element (22) einen Transmissionsgrad von mindestens 99 % und einen Wirkungsgrad von mindestens 97 % aufweist.

8. Verfahren zum Erzeugen eines Hologramms, umfassend die folgenden Schritte:
Anordnen eines Hologrammmasters (9) und eines zu belichtenden holografischen Aufzeichnungsmaterials (8) in einer Masteraufnahme (23),
Erzeugen von Laserstrahlung (5) mittels einer Laserstrahlungsquelle (21), Einstrahlen der erzeugten Laserstrahlung (5) auf ein Diffraktives Optisches Element (22),
wobei das Diffraktive Optische Element (22) derart bereitgestellt oder ausgewählt wurde, dass die durch das Diffraktive Optische Element (22) transmittierte Laserstrahlung (5) in Bezug auf eine Fokusebene (24) des Diffraktiven Optischen Elements (22) in seiner Form und seiner Intensität verändert und eingestellt wird und auf eine Einstrahlebene (17) in einem Strahlengang der optischen Anordnung (20) abgebildet wird und hierdurch ein erster Belichtungsbereich (10) bestrahlt wird, der mit einem zum Erzeugen des Hologramms zu belichtenden Bereich (25) des holografischen Aufzeichnungsmaterials (8) korrespondiert, und ferner, dass die von der Laserstrahlungsquelle (21) ausgesandte und durch das Diffraktive Optische Element (22) transmittierte Laserstrahlung (5) in Bezug auf die Fokusebene (24) in seiner Form und seiner Intensität verändert und eingestellt wird und auf mindestens eine weitere Einstrahlebene (17) in dem Strahlengang der optischen Anordnung (20) abgebildet wird und hierdurch mindestens ein weiterer Belichtungsbereich, räumlich getrennt vom ersten Belichtungsbereich auf dem holografischen Aufzeichnungsmaterial (8), bestrahlt wird, der mit einem zum Erzeugen eines weiteren Hologramms zu belichtenden weiteren Bereich des holografischen Aufzeichnungsmaterials (8) korrespondiert.

9. Verfahren nach Anspruch 8, **dadurch gekennzeichnet, dass** das Diffraktive Optische Element (22) derart bereitgestellt oder ausgewählt wurde, dass ein Intensitätsprofil der transmittierten Laserstrahlung (5) auf die zu belichtenden Bereiche (25) abgestimmt ist.

10. Verfahren nach Anspruch 8 oder 9, **dadurch gekennzeichnet, dass** die transmittierte Laserstrahlung (5) in Bezug auf eine Flächennormale (27) des zu belichtenden holografischen Aufzeichnungsmaterials (8) mittels eines Spiegels (7) unter einem Winkel (26) auf dieses abgebildet wird.

## Claims

1. A device (1) for generating a hologram using a hologram master (9), comprising:
an optical system (20),
the optical system (20), along an optical axis, comprising at least one laser radiation source (21), a diffractive optical element (22) and a master holder (23),
the master holder (23) being configured to allow a holographic recording material (8) to be exposed and the hologram master (9) to be arranged therein or thereon; and
the diffractive optical element (22) being designed so as to change and adjust the shape and the intensity of laser radiation (5) emitted by the laser radiation source (21) and transmitted by the diffractive optical element (22) with respect to a focal plane (24) of the diffractive optical element (22), and to map the laser radiation on an irradiation plane (17) in a beam path of the optical system (20), and
thereby irradiate a first exposure area (10), which corresponds to an area (25) of the holographic recording material (8) to be exposed for generating the hologram,
the diffractive optical element (22) furthermore being designed so as to change and adjust the shape and the intensity of the laser radiation (5) emitted by the laser radiation source (21) and transmitted by the diffractive optical element (22) with respect to the focal plane (24), and to map the laser radiation on at least one further irradiation plane (17) in the beam path of the optical system (20), and
thereby irradiate at least one further exposure area, which is spatially separated from the first exposure area, on the holographic recording material (8) and which corresponds to a further area of the holographic recording material (8) to be exposed for generating a further hologram.

2. The device (1) according to claim 1, **characterized in that** the diffractive optical element (22) is designed in such a way that an intensity profile of the transmitted laser radiation (5) is matched to the areas (25) to be exposed.

3. The device (1) according to claim 1 or 2, **characterized in that** the optical system (20) comprises a mirror (7), the mirror (7) being designed and arranged in such a way that the laser radiation (5), with respect to a surface normal (27) of the holographic recording material (8) to be exposed, can be mapped at an angle (26) thereon.

4. The device (1) according to claim 3, **characterized in that** the mirror (7) is designed so as to be adjustable in terms of the position thereof and/or at least one axis of the mirror (7) is rotatably designed so that the angle (7) is variable.

5. The device (1) according to any one of the preceding claims, **characterized in that** the optical system (20) comprises a spatial light modulator (15) arranged in the beam path, the spatial light modulator (15) being designed so as to customize the hologram to be generated, the irradiation planes (17) coinciding with the coupling plane (18) of the spatial light modulator (15).

6. The device (1) according to claim 5, **characterized in that** the spatial light modulator (15) is a liquid crystal on silicon modulator.

7. The device (1) according to any one of the preceding claims, **characterized in that** the diffractive optical element (22) has at least 32 etching stages, so that the transmittance of the diffractive optical element (22) is at least 99% and the efficiency is at least 97%.

8. A method for generating a hologram, comprising the following steps:
arranging a hologram master (9) and a holographic recording material (8) to be exposed in a master holder (23);
generating laser radiation (5) by means of a laser radiation source (21);
irradiating the generated laser radiation (5) onto a diffractive optical element (22), the diffractive optical element (22) having been provided or selected in such a way that the shape and the intensity of the laser radiation (5) transmitted by the diffractive optical element (22) are changed and adjusted with respect to a focal plane (24) of the diffractive optical element (22), and the laser radiation is mapped on an irradiation plane (17) in a beam path of the optical system (20), and thereby a first exposure area (10) is irradiated, which corresponds to an area (25) of the holographic recording material (8) to be exposed for generating the hologram, and furthermore that the shape and the intensity of the laser radiation (5) emitted by the laser radiation source (21) and transmitted by the diffractive optical element (22) are changed and adjusted with respect to the focal plane (24), and the laser radiation is mapped on at least one further irradiation plane (17) in the beam path of the optical system (20), and thereby at least one further exposure area, which is spatially separated from the first exposure area, on the holographic recording material (8) is irradiated, which corresponds to a further area of the holographic recording material (8) to be exposed for generating a further hologram.

9. The method according to claim 8, **characterized in that** the diffractive optical element (22) was provided or selected in such a way that an intensity profile of the transmitted laser radiation (5) is matched to the areas (25) to be exposed.

10. The method according to claim 8 or 9, **characterized in that** the transmitted laser radiation (5), with respect to a surface normal (27) of the holographic recording material (8) to be exposed, is mapped at an angle (26) thereon by means of a mirror (7).

## Revendications

1. Dispositif (1) de génération d'un hologramme avec un hologramme maître (9), comprenant :
un dispositif optique (20),
le dispositif optique (20) présentant, le long d'un axe optique, au moins une source de rayonnement laser (21), un Élément Optique Diffractif (22) et un enregistrement maître (23), l'enregistrement maître (23) étant conçu de sorte que dans ou sur celui-ci puissent être disposés un matériau d'enregistrement holographique (8) à éclairer et l'hologramme maître (9), et
dans lequel l'Élément Optique Diffractif (22) est conçu pour modifier et régler en forme et en intensité un rayon laser (5) émis par la source de rayonnement laser (21) et transmis par l'Élément Optique Diffractif (22) par rapport à un plan de focalisation (24) de l'Élément Optique Diffractif (22), et pour le représenter sur un plan d'incidence (17) sur un chemin optique du dispositif optique (20), et ainsi pour irradier une première zone d'éclairage (10) du matériau d'enregistrement holographique (8) qui correspond à une zone à éclairer (25) pour créer l'hologramme,
dans lequel l'Élément Optique Diffractif (22) est conçu en outre pour modifier et régler en forme et en intensité le rayon laser (5) émis par la source de rayonnement laser (21) et transmis par l'Élément Optique Diffractif (22) par rapport au plan de focalisation (24), et pour le représenter sur au moins un autre plan d'incidence (17) sur le chemin optique du dispositif optique (20), et ainsi pour irradier une autre zone d'éclairage sur le matériau d'enregistrement holographique (8) séparée spatialement de la première zone d'éclairage, qui correspond à une autre zone à éclairer du matériau d'enregistrement holographique (8) pour créer un autre hologramme.

2. Dispositif (1) selon la revendication 1, **caractérisé en ce que** l'Élément Optique Diffractif (22) est conçu de sorte qu'un profil d'intensité du rayon laser transmis (5) est adapté aux zones à éclairer (25).

3. Dispositif (1) selon la revendication 1 ou 2, **caractérisé en ce que** le dispositif optique (20) comprend un miroir (7), le miroir (7) étant conçu et disposé de sorte que le rayon laser (5) puisse être représenté sous un angle (26) par rapport à la normale à la surface (27) du matériau d'enregistrement holographique (8) à éclairer.

4. Dispositif (1) selon la revendication 3, **caractérisé en ce que** le miroir (7) est conçu réglable en position et/ou **en ce qu'**au moins un axe du miroir (7) est conçu orientable de sorte que l'angle (26) soit modifiable.

5. Dispositif (1) selon l'une des revendications précédentes, **caractérisé en ce que** le dispositif optique (20) comprend un Modulateur Spatial de Lumière (15) sur le chemin optique, le Modulateur Spatial de Lumière (15) étant conçu de façon à individualiser l'hologramme créateur, les plans d'incidence (17) coïncidant avec un plan de couplage (18) du Modulateur Spatial de Lumière (15).

6. Dispositif (1) selon la revendication 5, **caractérisé en ce que** le Modulateur Spatial de Lumière (15) est un modulateur à cristaux liquides sur silicium.

7. Dispositif (1) selon l'une des revendications précédentes, **caractérisé en ce que** l'Élément Optique Diffractif (22) présente au moins 32 étapes de gravure, de sorte que l'Élément Optique Diffractif (22) présente une transmitivité d'au moins 99 % et une efficacité d'au moins 97 %.

8. Procédé de génération d'un hologramme, comprenant les étapes suivantes :
Disposition d'un hologramme maître (9) et d'un matériau d'enregistrement holographique (8) à éclairer dans un enregistrement maître (23), génération de rayon laser (5) au moyen une source de rayonnement laser (21), irradiation par le rayon laser généré (5) sur l'Élément Optique Diffractif (22),
dans lequel l'Élément Optique Diffractif (22) est préparé ou sélectionné de sorte que le rayon laser (5) transmis à travers l'Élément Optique Diffractif (22) est modifié et réglé en forme et en intensité par rapport à un plan de focalisation (24) de l'Élément Optique Diffractif (22) et est représenté sur un plan d'incidence (17) sur un chemin optique du dispositif optique (20), et ainsi une première zone d'éclairage (10) est irradiée qui correspond à une zone à éclairer (25) du matériau d'enregistrement holographique (8) pour générer l'hologramme, et en outre de sorte qu'un rayon laser (5) émis par la source de rayonnement laser (21) et transmis par l'Élément Optique Diffractif (22) est modifié et réglé en forme et en intensité par rapport au plan de focalisation (24) et est représenté sur au moins un autre plan d'incidence (17) sur le chemin optique du dispositif optique (20) et ainsi de sorte qu'au moins une autre zone à éclairer, séparée spatialement de la première zone d'éclairage sur le matériau d'enregistrement holographique (8), est irradiée, qui correspond à une autre zone à éclairer du matériau d'enregistrement holographique (8) pour générer un autre hologramme.

9. Procédé selon la revendication 8, **caractérisé en ce que** l'Élément Optique Diffractif (22) est préparé ou sélectionné de sorte qu'un profil d'intensité du rayon laser transmis (5) est adapté aux zones à éclairer (25).

10. Procédé selon la revendication 8 ou 9, **caractérisé en ce que** le rayon laser transmis (5) est représenté sous un angle (26) par rapport à une normale à la surface (27) du matériau d'enregistrement holographique (8) à éclairer au moyen d'un miroir (7).
